# EUROPEAN PATENT APPLICATION

(11) **EP 3 812 898 A2**
(43) Date of publication of application: **28.04.2021**
(21) Application number: 21157904.0
(22) Date of filing: 18.02.2021
(51) Int. Cl.: G06F 9/455, G06F 9/445, G06F 8/60, G06F 11/30

(54) **CONTAINER-BASED METHOD FOR APPLICATION STARTUP**

(30) Priority: 15.05.2020 CN 202010415301
(71) Applicant: BEIJING BAIDU NETCOM SCIENCE TECHNOLOGY CO., LTD., No.10 Shangdi 10th Street Haidian District Beijing 100085 (CN)
(72) Inventor: CHEN, Du, Beijing, 100085 (CN)
(74) Representative: Studio Torta S.p.A.

(57) **Abstract**

The present application discloses an application startup method and apparatus, a device and a storage medium. The specific implementation solution thereof is: the method is applied to a host application having carried thereon at least one accessory application, and the method includes: preprocessing, if it is determined that a preprocessing condition of the at least one accessory application is met, an accessory application by using a corresponding running container in a background, wherein preprocessing comprises preloading of the accessory application and pre-downloading of service data; and starting a corresponding accessory application in a foreground, in response to a selection operation of the accessory application. In this way, preprocessing processes of different accessory applications can be physically isolated, completely, through the running container and mutual interference can be avoided, thereby protecting a running sandbox mechanism between accessory applications, realizing free installation of corresponding accessory application in the running container, improving security during accessory application preprocessing and speed of starting the accessory application, and avoiding startup performance degradation.

## Description

### TECHNICAL FIELD

The present application relates to the field of data processing technology and, in particular, to artificial intelligence technology.

### BACKGROUND

With the development of mobile internet, various applications (referred to as APP) have emerged. Since smart applets can be used without downloading and installing by a user, there are various smart applets configured in many APPs. The APP is a host application, and the smart applet is an accessory application.

In the prior art, in order to start the accessory application instantly, it is necessary to preload the accessory application and pre-download the service data in advance, that is, to preprocess the accessory application.

However, preprocessing each accessory application in the prior art is a single-threaded task. If the user starts another accessory application while an accessory application is preloaded, then the first accessory application must be preloaded before another accessory application is started, resulting in performance degradation. Moreover, applying the single-threaded task to preload multiple accessory applications will destroy running sandbox mechanism between various accessory applications and then cause the various accessory applications to interfere with each other, thereby making it impossible to freely configure the accessory applications for developers and posing a greater security risk.

### SUMMARY

Embodiments of the present application provide an application startup method and apparatus, a device and a storage medium, which solve the problems of destroying a running sandbox mechanism between various accessory applications, causing the various accessory applications to interfere with each other, and having a greater security risk, which are all the result of using a single-threaded task to preload multiple accessory applications.

A first aspect of an embodiment of the present application provides an application startup method that is applied to a host application having carried thereon at least one accessory application, and the method includes:
preprocessing, if it is determined that a preprocessing condition of the at least one accessory application is met, an accessory application by using a corresponding running container in a background; and
starting a corresponding accessory application in a foreground, in response to a selection operation to the accessory application.

A second aspect of an embodiment of the present application provides an application startup apparatus that is applied to a host application having carried thereon at least one accessory application, and the apparatus includes:
an application preprocessing module, configured to preprocess, if it is determined that a preprocessing condition of the at least one accessory application is met, an accessory application by using a corresponding running container in a background; and
an application startup module, configured to start a corresponding accessory application in a foreground, in response to a selection operation to the accessory application.

A third aspect of an embodiment of the present application provides an electronic device, which includes: at least one processor; and a memory communicatively connected with the at least one processor; where,
the memory stores instructions executable by the at least one processor, and the instructions are executed by the at least one processor to enable the at least one processor to perform the method according to any one of the first aspect.

A fourth aspect of an embodiment of the present application provides a non-transitory computer-readable storage medium having stored thereon computer instructions, where the computer instructions are used to cause a computer to perform the method according to any one of the first aspect.

A fifth aspect of an embodiment of the present application provides a computer program, which includes program codes, when a computer runs the computer program, the program codes execute the method according to any one of the first aspect.

A sixth aspect of the present application provides a computer program product, where the program product includes: a computer program, the computer program is stored in a readable storage medium, at least one processor of the electronic device can read the computer program from the readable storage medium, and the at least one processor executes the computer program such that the electronic device executes the method according to any one of the first aspect.

When preprocessing the accessory application, the corresponding running container is used in the background to preprocess the accessory application, so that preprocessing processes of different accessory applications can be physically isolated, completely, through the running container and mutual interference can be avoided, thereby protecting a running sandbox mechanism between accessory applications, realizing free installation of corresponding accessory application in the running container, and improving security during accessory application preprocessing. Moreover, since each running container is an independent single-threaded task, when an accessory application is preloaded in the corresponding running container, if the user starts another accessory application, such accessory application can also be started directly in the corresponding running container. It is not necessary to start the accessory application after the preloading of the other accessory application is completed. The speed of starting the accessory application is improved and the startup performance degradation is avoided.

It should be understood that what is described herein is not intended to identify key or important features of the embodiments of the present disclosure, nor is it used to limit the scope of the present disclosure. Other features of the present disclosure will be easily understood from the following description.

### BRIEF DESCRIPTION OF THE DRAWINGS

Accompanying drawings are used for better understanding of the solution and do not constitute a limitation to the present application, in which:
FIG. 1 is a first application scenario that can implement an application startup method according to an embodiment of the present application;
FIG. 2 is a second application scenario that can implement an application startup method according to an embodiment of the present application;
FIG. 3 is a schematic flowchart of an application startup method according to Embodiment 1 of the present application;
FIG. 4 is a schematic flowchart of an application startup method according to Embodiment 2 of the present application;
FIG. 5 is a schematic flowchart of an application startup method according to Embodiment 3 of the present application;
FIG. 6 is a schematic structural diagram of an application startup apparatus according to Embodiment 4 of the present application;
FIG. 7 is a schematic structural diagram of an application startup apparatus according to Embodiment 5 of the present application; and
FIG. 8 is a block diagram of an electronic device used to implement the application startup method according to an embodiment of the present application.

### DESCRIPTION OF EMBODIMENTS

Exemplary embodiments of the present application are described below with reference to the accompanying drawings, which include various details of the embodiments of the present application that are useful for understanding the present application and should be considered as merely exemplary. Therefore, those of ordinary skilled in the art should realize that various changes and modifications can be made to the embodiments described herein without departing from the scope and spirit of the present application. Likewise, for clarity and conciseness, descriptions of well-known functions and structures are omitted in the following description.

In order to clearly understand the technical solution of the present application, firstly, the solution in the prior art is described in detail. Since smart applets can be used without downloading and installing by the user, they are various smart applets carried in many APPs. The smart applet carried is an accessory application, and APP is a host application. In the prior art, if the accessory application is triggered to start after the user starts the host application, for the purpose of starting the accessory application instantly, it is necessary to perform preprocessing on the accessory application, which includes preloading of the accessory application and pre-downloading of service data. In the prior art, a single-threaded task is used to preprocess multiple accessory applications when facing the multiple accessory applications. If the user starts another accessory application while a first accessory application is preloaded, the first accessory application must be preloaded before the above another accessory application is started, thereby resulting in performance degradation. Moreover, applying the single-threaded task to preload multiple accessory applications will destroy the running sandbox mechanism between various accessory applications and then cause the various accessory applications interfere with each other, thereby making it impossible to freely configure the accessory applications for lots of developers and posing a greater security risk. For example, if the developer of the first accessory application configures a timer in the preloading process, when the user starts the second accessory application, the preloading process of the first accessory application will interfere with the second accessory application started by the user because the timer front-end framework of the first accessory application cannot be destroyed uniformly, thereby destroying the running sandbox mechanism between various accessory applications.

Therefore, for the problem of preprocessing multiple accessory applications with a single-threaded task in the prior art, the inventor found through research: since the running container can physically isolate different tasks well, and each running container is an independent single-threaded task at runtime and can run independently, preprocessing processes of multiple accessory applications can be deployed in different running containers. If it is determined that preprocessing condition of at least one accessory application is met, an accessory application is preprocessed by using a corresponding running container in the background; and in response to selecting the accessory application, a corresponding accessory application is started in the foreground.

Based on the foregoing creative discovery, the inventor proposed the technical solution of the present application. The following describes the application scenario of the application startup method provided in the embodiment of the present application.

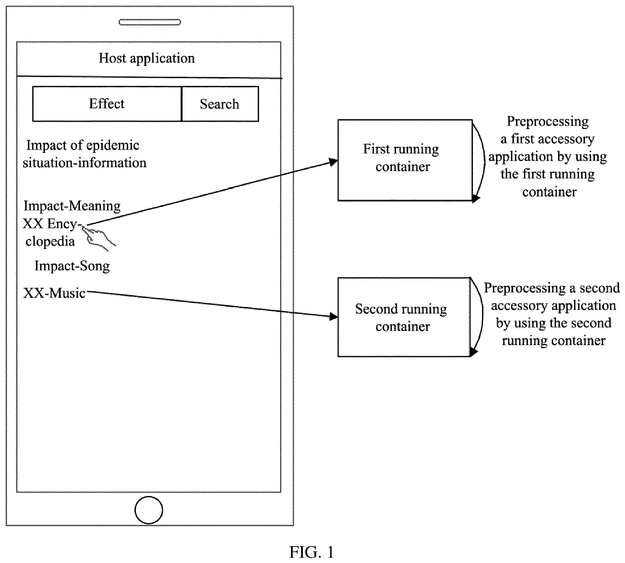

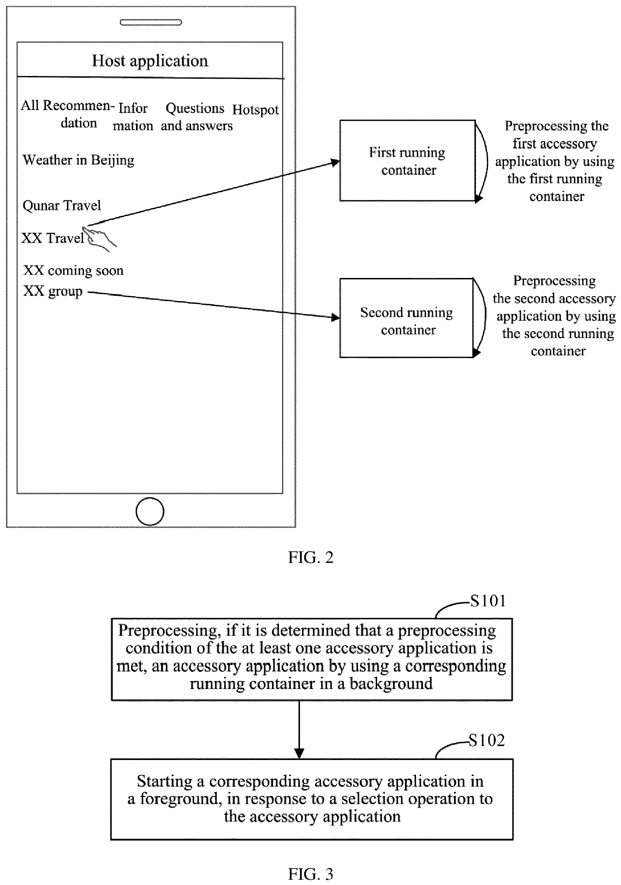

As shown in FIG. 1, the application scenario of the embodiment of the present application may be a search scenario. Specifically, a host application is installed in the electronic device, and at least one accessory application is installed in the host application. After entering the host application, a search box can be set in the display area of the host application, and the user may enter keywords (e.g., "impact") in the search box to trigger a search request. The host application searches for resources according to the search request, and displays the searched resources on the resource result page in the display area. If it is determined that at least one accessory application is included in the resource result page, it is determined that preprocessing conditions of the at least one accessory application are met, and the corresponding running container is pre-created in the background. For example, two running containers are pre-created in FIG. 2, where one is a first running container, and the other is a second running container. The corresponding running container is used to preprocess the accessory application in the background. As shown in FIG. 2, the first running container is used to preprocess the first accessory application, and the second running container is used to preprocess the second accessory application. Where the first accessory application is "XX Wiki", and the second accessory application is "XX Music". After the accessory application is preprocessed by the running container, the startup display page of the accessory application is included in the running container. If a user's selection operation (such as "clicking") on an accessory application is received, the host application starts the corresponding accessory application in the foreground, so that the startup display page of the accessory application is able to display.

As shown in FIG. 2, the application scenario of the embodiment of the present application may also be a push scenario of the information flow. Specifically, a host application is installed in the electronic device, and at least one accessory application is installed in the host application. After entering the host application, a resource result page recommended by the information flow is displayed in the display area of the host application, where the resources displayed on the recommended resource result page can be recommended based on user behavior information, historical browsing information, and the like. If it is determined that at least one accessory application is included in the resource result page, it is determined that preprocessing condition of the at least one accessory application are met, and the corresponding running container is pre-created in the background. Similar to the search scenario, two running containers are pre-created in FIG. 3, where one is a first running container, and the other is a second running container. The corresponding running container is used to preprocess the accessory application in the background. Exemplarily, the first running container is used to preprocess the first accessory application, and the second running container is used to preprocess the second accessory application. Where the first accessory application is "XX Tourism", and the second accessory application is "XX Group". After the accessory application is preprocessed by using the corresponding running container, the startup display page of the accessory application is included in the corresponding running container. If a user's selection operation (such as "clicking") on an accessory application is received, the host application starts the corresponding accessory application in the foreground, so that the startup display page of the accessory application is able to display.

It is understandable that the application startup method provided in the embodiment of the present application can also be applied in other application scenarios, which is not limited in this embodiment.

The embodiments of the present application will be specifically described below with reference to the accompanying drawings.

### Embodiment 1

FIG. 3 is a schematic flowchart of an application startup method according to Embodiment 1 of the present application. As shown in FIG. 3, the executive subject of the embodiment of the present application is an application startup apparatus that can be applied to a host application, which is installed in an electronic device. At least one accessory application is carried in the host application, and the application startup method provided in this embodiment includes following steps.

Step 101, preprocessing, if it is determined that a preprocessing condition of the at least one accessory application is met, an accessory application by using a corresponding running container in a background.

In this embodiment, since at least one accessory application is carried in the host application, when starting the host application, for the purpose of starting the accessory application instantly when the accessory application startup conditions are met, it is necessary to create multiple running containers in the background. Each running container is a single-threaded task at runtime, and different running containers are physically isolated and will not interfere with each other.

And then it is necessary to monitor whether the preprocessing conditions of at least one subsidiary application are met; if yes, the accessory application is preprocessed by using the corresponding running container in the background.

Where the preprocessing process of the host application to the accessory application includes the preloading process of the accessory application and the pre-downloading process of the accessory application to its service data. After the service data is downloaded, the accessory application can render and generate, according to the service data, a startup display page corresponding to the accessory application.

Therefore, in this embodiment, the host application monitors whether the preloading conditions of the accessory application are met when monitoring whether the preprocessing conditions of the accessory application are met. If the preloading conditions of the accessory application are met, the corresponding running container is obtained in the background, and the accessory application is preloaded in the running container. Afterwards, the accessory application monitors whether the pre-download conditions of its service data are met; if yes, the service data is pre-downloaded in the corresponding running container, and a startup display page corresponding to the accessory application can be rendered and generated in the running container according to the service data, so that when the host application determines that the starting conditions of the accessory application are met, it obtains the startup display page of the accessory application from the corresponding running container, and displays the startup display page in the display area of the accessory application.

Step 102, starting a corresponding accessory application in a foreground, in response to a selection operation to the accessory application.

In this embodiment, after the preprocessing of the corresponding accessory application is completed in the corresponding running container in the background, if the user triggers the selection operation to an accessory application, such as clicking the icon of the accessory application, in response to the selection operation of the accessory application, the startup display page of the accessory application is obtained from the corresponding running container and the startup display page is displayed in the display area of the foreground, so as to start the corresponding accessory application.

In the application startup method provided by this embodiment, if it is determined that the preprocessing conditions of at least one accessory application are met, the accessory application is pro-processed in the background by using the corresponding running container; and in response to the selection operation to the accessory application, the corresponding accessory application is started in the foreground. When preprocessing the accessory application, the corresponding running container is used in the background to preprocess the accessory application, so that preprocessing processes of different accessory applications can be physically isolated, completely, through the running container and mutual interference can be avoided, thereby protecting a running sandbox mechanism between accessory applications, realizing free installation of corresponding accessory application in the running container, and improving security during accessory application preprocessing. Moreover, since each running container is an independent single-threaded task, when an accessory application is preloaded in the corresponding running container, if the user starts another accessory application, such accessory application can also be started directly in the corresponding running container. It is not necessary to start the accessory application after the preloading of the other accessory application is completed. The speed of starting the accessory application is improved and the startup performance degradation is avoided.

### Embodiment 2

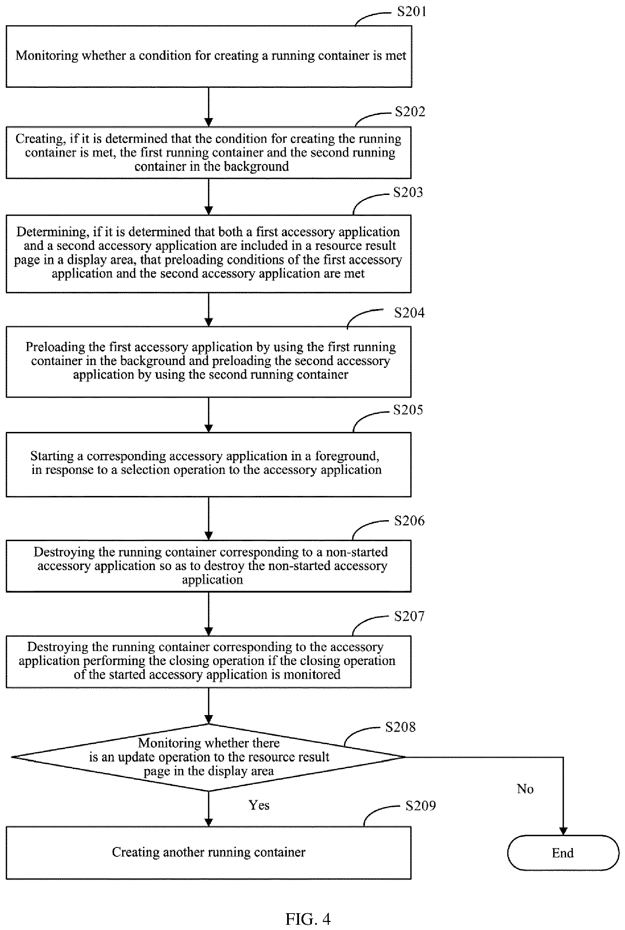

FIG. 4 is a schematic flowchart of an application startup method according to Embodiment 2 of the present application. As shown in FIG. 4, on the basis of the application startup method provided in Embodiment 1 of the present application, the application startup method provided in this embodiment further defines step 101 to step 102, and it further includes the steps as following: creating a running container, destroying the running container corresponding to the non-started accessory application so as to destroy the non-started accessory application, and destroying the running container corresponding to the accessory application performing the closing operation if the closing operation of the started accessory application is monitored. Therefore, the application startup method provided in this embodiment includes following steps.

Step 201, Monitoring whether a condition for creating a running container is met.

In this embodiment, since at least one accessory application is carried in the host application, as an optional implementation, in this embodiment, whether the host application is started is monitored while whether the conditions for creating a running container are met is monitored; if it is determined the host application is started, it is determined that the conditions for creating a running container are met; and if it is determined the host application is not started, it is determined that the conditions for creating a running container are not met.

In the case of monitoring whether to start the host application, it can be monitored by monitoring whether the host application is included in the process, or it can be monitored by monitoring whether the user starts the host application client, which is not limited in this embodiment.

In this embodiment, whether the condition for creating the running container is met is monitored by monitoring whether the host application is started; if yes, it is determined that the condition for creating a running container is met; and if not, it is determined that the condition for creating a running container is not met. It is possible to make the process of creating the running container as early as possible to provide sufficient time for the preprocessing process of the accessory application, so as to start the accessory application instantly when the accessory application is started.

Step 202, creating, if it is determined that the condition for creating the running container is met, the first running container and the second running container in the background.

In this embodiment, if it is determined that the condition for creating a running container is met, two running containers are created in the background. Where one is a first running container and one is a second running container.

Where the first running container is configured to preprocess the accessory application that meets the preprocessing condition firstly, and the second running container is configured to preprocess another accessory application that meets the preprocessing condition later.

In this embodiment, when the conditions for creating a running container are met, a first running container and a second running container are created in the background, which can avoid excessively consuming memory resources due to the excessive number of running containers when the preprocessing processes of different accessory applications are physically isolated completely through corresponding the running container.

Step 203, determining, if it is determined that both a first accessory application and a second accessory application are included in a resource result page in a display area, that preloading conditions of the first accessory application and the second accessory application are met.

Where the first accessory application is located in front of the second accessory application on the resource result page.

Optionally, in this embodiment, either in the searching scenario or in the recommendation scenario of the information flow, the resource result page will be displayed in the display area of the host application. The resource result page is checked. If it is determined that two accessory applications are successively displayed on the resource result page, namely the first accessory application and the second accessory application, it is determined that the preloading conditions of the first accessory application and the second accessory application are met.

Step 204, preloading the first accessory application by using the first running container in the background and preloading the second accessory application by using the second running container.

In this embodiment, if it is determined that the preloading condition of the first accessory application is met, the first accessory application is preloaded by using the first running container in the background. Firstly, in the first running container, the application framework of the first accessory application is preloaded. Afterwards, based on the application framework, the installation package of the first accessory application is downloaded from the first auxiliary application server, and the setting startup file in the installation package is preloaded in the first running container.

Likewise, if it is determined that the preloading condition of the second accessory application is met, the second accessory application is preloaded, by using the second running container in the background. Firstly, in the second running container, the application framework of the second accessory application is preloaded. Afterwards, based on the application framework, the installation package of the second accessory application is downloaded from the second application server, and the setting startup file in the installation package is preloaded in the second running container.

Where the preloaded accessory application includes a corresponding target function that is used to indicate that when it is determined that the corresponding accessory application meet the download conditions of the service data, the service data of the corresponding accessory application is pre-downloaded in the corresponding running container, and the startup display page of the corresponding accessory application is rendered and generated in the corresponding running container.

Specifically, in this embodiment, after the first accessory application is preloaded in the first running container, the preloaded first accessory application includes a corresponding target function which is the first target function. It is triggered to perform the first target function when the first accessory application is in the prefetching life cycle, so that when it is determined that the environment description information of the first accessory application meets the preset condition, it is determined that the first accessory application meets the download condition of the service data, and the service data of the first accessory application is pre-downloaded in the main running container.

Likewise, after preloading the second accessory application in the second running container, the preloaded second accessory application includes the corresponding target function which is the second target function. It is triggered to perform the second target function when the second accessory application is in the prefetching life cycle, so that when it is determined that the environment description information of the second accessory application meets the preset condition, it is determined that the second accessory application meets the download condition of service data, and the service data of the second accessory application is pre-downloaded in the standby running container.

Where the prefetching life cycle may be: the accessory application is in a sliding state in the display area, the accessory application is in a hovering state in the display area, the accessory application is in a clicking state in the display area, etc. The environment description information may be: the current display state of the accessory application, the entry information of the accessory application, the page description information of the page to be displayed of the accessory application, etc.

Where the preset condition may be: the current display state of the accessory application is the preset display state. For example, the preset condition is: the current display state of the accessory application is the clicking state, or the preset condition may also be: the entry information of the accessory application is the preset entry information. For example, the preset condition is: the entry information of the accessory application is a search scenario. Or the preset condition may also be: the page description information of the page to be displayed of the accessory application is the preset page description information. For example, the preset condition is: the page description information of the page to be displayed on the accessory application side is a first-level page.

Taking the pre-downloading of service data by the first accessory application in the first running container as an example to explain in details. Specifically, in this embodiment, the preloaded first accessory application detects the prefetching life cycle in the first running container, if it is detected that the current first accessory application is in the prefetching life cycle, it is triggered to perform the target function included in the first accessory application. The environment description information of the first auxiliary application is input into the target function, by which the preset condition is defined in advance. It is determined whether the input environment description information meets the preset condition; if yes, it is determined that download condition of the service data is met, the service data acquiring request is constructed and then sent to the first accessory application server, the service data of the first accessory application fed back by the first accessory application server is received and stored in the main running container, and a startup display page corresponding to the accessory application is rendered and generated according to the service data of the first accessory application.

Step 205, starting a corresponding accessory application in a foreground, in response to a selection operation to the accessory application.

In this embodiment, the implementation of step 205 is similar to that of step 102 in Embodiment 1 of the present application, which will not be repeated herein.

Step 206, destroying the running container corresponding to the non-started accessory application so as to destroy the non-started accessory application.

Optionally, in this embodiment, if the first accessory application is started, it indicates that the second accessory application will not be started. Therefore, for the purpose of reducing the memory resource consumption, the second running container corresponding to the second accessory application is destroyed. When the second running container is destroyed, the data of the second accessory application in the preprocessing stage is also destroyed.

Otherwise, optionally, if the second accessory application is started, it indicates that the first accessory application will not be started. Therefore, for the purpose of reducing the memory resource consumption, the first running container corresponding to the first accessory application is destroyed. When the second running container is destroyed, the data of the first accessory application in the preprocessing stage is also destroyed.

Step 207, destroying the running container corresponding to the accessory application performing the closing operation if the closing operation of the started accessory application is monitored.

Optionally, in this embodiment, after the user starts an accessory application, the status of the accessory application is monitored. If it is monitored that the user has performed a closing operation to the accessory application, it indicates that the accessory application will no longer be started. Therefore, for the purpose of reducing the memory resource consumption, the running container corresponding to the accessory application performing the closing operation is destroyed, so as to destroy the data of the accessory application performing the closing operation in the preprocessing process.

It is understandable that after the running container corresponding to the accessory application performing the closing operation is destroyed, a corresponding idle running container is created to ensure, at any time, that two running containers are available and at least one running container is in an idle state. Other accessory applications are preprocessed, which not only realizes the physical isolation between accessory applications, but also tries to ensure that each accessory application is started instantly.

Step 208, monitoring whether there is an update operation to the resource result page in the display area; if yes, performing step 209, otherwise, exit.

Step 209, creating another running container.

Optionally, in this embodiment, after the started accessory application is closed, if the user updates the operation on the resource result page in the display area, it indicates that the user may start other accessory applications displayed in the updated resource result page. Therefore, if it is monitored that there is an update operation to the resource result page in the display area, another running container is created. The running container can be used to preprocess other accessory applications displayed on the updated resource result page, so as to ensure that at least one running container is in an idle state for preprocessing other accessory applications, which not only realizes the physical isolation between accessory applications, but also tries to ensure that each accessory application is started instantly.

Where the update operation performed by the user on the resource result page in the display area may be: the user's sliding operation or other update operations on the resource result page in the display area, which are not limited in this embodiment.

With respect to the application startup method provided by this embodiment, when it is determined that both the first accessory application and the second accessory application are included in the resource result page in the display area, it is determined that the pre-processing condition of at least one accessory application is met. The first accessory application is preloaded by using the first running container in the background, and the second accessory application is preloaded by using the second running container, which may satisfy the scenario where the corresponding accessory application is preprocessed by using the corresponding running container in the background when two accessory applications are displayed on the resource result page at the same time.

### Embodiment 3

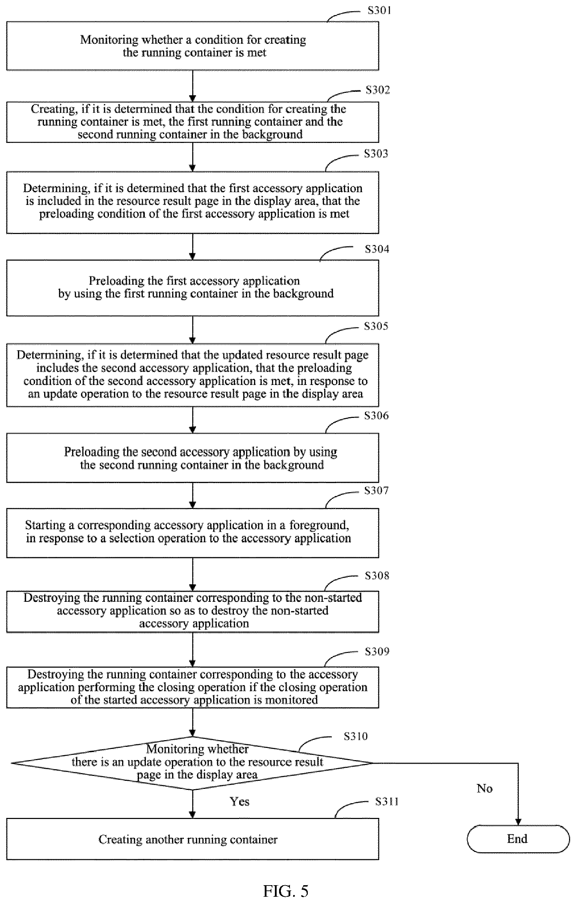

FIG. 5 is a schematic flowchart of an application startup method according to Embodiment 3 of the present application. As shown in FIG. 5, on the basis of Embodiment 1 of the present application, the application startup method provided in this embodiment further defines step 101 to step 102. The difference between Embodiment 3 and Embodiment 2 lies in the specific defining step of step 101, and be similar to the Embodiment 12, following steps are also included: creating the running container, destroying the running container corresponding to the non-started accessory application to destroy the non-started accessory application, and destroying the running container corresponding to the accessory application performing the closing operation if the closing operation to the started accessory application is monitored. Therefore, the application startup method provided in this embodiment includes the following steps.

Step 301, monitoring whether a condition for creating the running container is met.

Step 302, creating, if it is determined that the condition for creating the running container is met, the first running container and the second running container in the background.

In this embodiment, the implementation of step 301 to step 302 is similar to that of step 201 to step 202 in Embodiment 2 of the present application, which will not be repeated herein.

Step 303, determining, if it is determined that the first accessory application is included in the resource result page in the display area, that the preloading condition of the first accessory application is met.

Optionally, in this embodiment, only the first accessory application is included in the current resource result page in the display area, which indicates that only the preloading condition of the first accessory application is met. At present, only the step of preloading the first accessory application by using the first running container in the background is performed.

Step 304, preloading the first accessory application by using the first running container in the background.

In this embodiment, the implementation of step 304 is similar to that of step 204 in Embodiment 2 in which the first accessory application is preloaded by using the first running container in the background, which will not be repeated herein.

Step 305, determining, if it is determined that the updated resource result page includes the second accessory application, that the preloading condition of the second accessory application is met, in response to an update operation to the resource result page in the display area.

Optionally, in this embodiment, when the user updates the resource result page in the display area, if the updated resource result page includes the second accessory application in the process of updating the resource result page, it is determined that the preloading condition of the second accessory application is met.

Where the update operation performed by the user on the resource result page in the display area may be: the user's sliding operation on the resource result page in the display area, or other update operations, which are not limited in this embodiment.

It is understandable that a situation occurs in the updated resource result page, that is, both the second accessory application and the first accessory application are available.

Step 306, preloading the second accessory application by using the second running container in the background.

In this embodiment, the implementation of step 306 is similar to that of step 204 in Embodiment 2 in which the second accessory application is preloaded by using the second running container in the background, which will not be repeated herein.

Where the preloaded accessory application includes a corresponding target function that is used to indicate that when it is determined that the corresponding accessory application meet the download condition of the service data, the service data of the corresponding accessory application is pre-downloaded in the corresponding running container, and the startup display page of the corresponding accessory application is rendered and generated in the corresponding running container.

Step 307, starting a corresponding accessory application in a foreground, in response to a selection operation to the accessory application.

Step 308, destroying the running container corresponding to the non-started accessory application so as to destroy the non-started accessory application.

Step 309, destroying the running container corresponding to the accessory application performing the closing operation if the closing operation of the started accessory application is monitored.

Step 310, monitoring whether there is an update operation to the resource result page in the display area; if yes, performing step 311, otherwise, exit.

Step 311, creating another running container.

In this embodiment, the implementation of step 307 to step 311 is similar to that of step 205 to step 209 in Embodiment 2 of the present application, which will not be repeated herein.

With respect to the application startup method provided by this embodiment, if it is determined that the first accessory application is included in the resource result page in the display area, it is determined that the preloading condition of the first accessory application is met, and the first accessory application is preloaded by using the first running container in the background; in response to the update operation to the resource result page in the display area, if it is determined that the second accessory application is included in the updated resource result page, it is determined that the preloading condition of the second accessory application are met; and the second accessory application is preloaded by using the second running container in the background. In this way, it may satisfy the scenario that the corresponding accessory applications are preprocessed by using the corresponding running container in the background when there are two accessory applications as the resource result page is updated.

It should be noted that various implementations in Embodiment 2 and Embodiment 3 can be implemented separately, or can be implemented in any combination without conflict, which is not limited in the present application.

### Embodiment 4

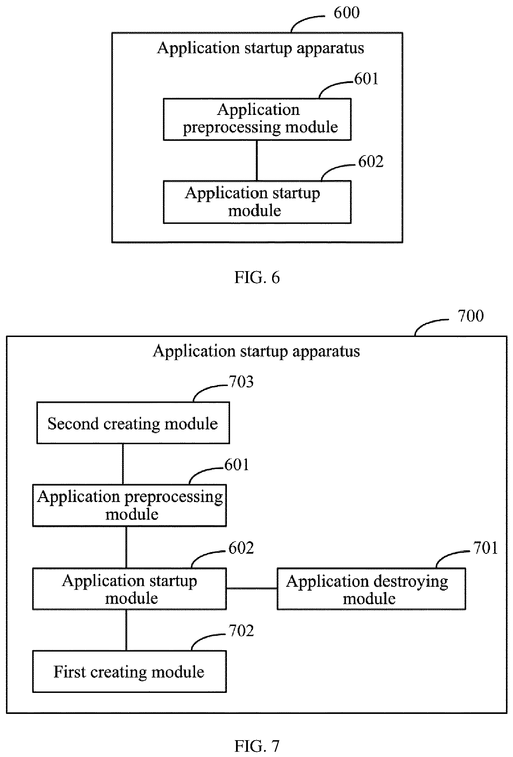

FIG. 6 is a schematic structural diagram of an application startup apparatus according to Embodiment 4 of the present application. As shown in FIG. 6, the application startup apparatus provided in this embodiment is applied to a host application that is carried with at least one accessory application and is located in an electronic device. The application startup apparatus 600 includes: an application preprocessing module 601 and an application startup module 602.

Where the application preprocessing module 601 is configured to preprocess, if it is determined that a preprocessing condition of the at least one accessory application is met, an accessory application by using a corresponding running container in a background. The application startup module 602 is configured to start a corresponding accessory application in a foreground, in response to a selection operation to the accessory application.

The application startup apparatus provided in this embodiment may perform the technical solution of the method embodiment shown in FIG. 3, and its implementation principle and technical effect are similar to those of the method embodiment shown in FIG. 3, which will not be repeated herein.

### Embodiment 5

FIG. 7 is a schematic structural diagram of AN application startup apparatus according to Embodiment 5 of the present application. As shown in FIG. 7, the application startup apparatus 700 provided in this embodiment, on the basis of the application startup apparatus 600 provided in Embodiment 4, further includes: an application destroying module 701, a first creating module 702 and a second creating module 703.

Optionally, the running container includes a first running container and a second running container.

Optionally, the application preprocessing module 601 is specifically configured to:
determine, if it is determined that both a first accessory application and a second accessory application are included in a resource result page in a display area, that preloading conditions of the first accessory application and the second accessory application are met, where the first accessory application is located in front of the second accessory application on the resource result page; and preload the first accessory application by using the first running container in the background, and preloading the second accessory application by using the second running container.

Optionally, the application preprocessing module 601 is specifically configured to:
determine, if it is determined that the first accessory application is included in the resource result page in the display area, that the preloading condition of the first accessory application is met; preload the first accessory application by using the first running container in the background; determine, if it is determined that the updated resource result page includes the second accessory application, that the preloading condition of the second accessory application is met, in response to an update operation to the resource result page in the display area; and preload the second accessory application by using the second running container in the background.

Where an preloaded accessory application includes a corresponding target function that is configured to indicate to, when it is determined that the corresponding accessory application meet a download condition of service data, pre-download the service data of the corresponding accessory application in the corresponding running container, and render and generate a startup display page of the corresponding accessory application in the corresponding running container.

Optionally, the application destroying module 701 is configured to destroy the running container corresponding to a non-started accessory application so as to destroy the non-started accessory application.

Optionally, the first creating module 702 is configured to monitor, if a closing operation of a started accessory application is monitored, whether there is an update operation to the resource result page in the display area; and create, if the update operation to the resource result page is monitored in the display area, another running container.

Optionally, the application destroying module 701 is further configured to:
destroy the running container corresponding to the accessory application performing the closing operation.

Optionally, the first second creating module 703 is configured to monitor whether a condition for creating the running container is met; and create, if it is determined that the condition for creating the running container is met, the first running container and the second running container in the background.

Optionally, the first second creating module 703, when monitoring whether a condition for creating the running container is met, is specifically configured to:
monitor whether the host application is started; determine, if it is determined to that the host application is started, that the condition for creating the running container is met; and determine, if it is determined that the host application is not started, that the condition for creating the running container is not met.

The application startup apparatus provided in this embodiment may perform the technical solution of the method embodiment shown in FIGs. 4 to 5, and its implementation principles and technical effect are similar to those of the method embodiments shown in FIGs. 4 to 5, which will not be repeated herein.

According to the embodiment of the present application, the present application also provides an electronic device and a readable storage medium.

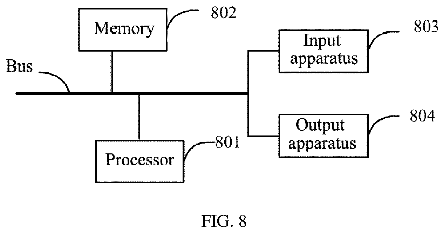

As shown in FIG. 8, which is a block diagram of an electronic device used to implement the application startup method according to the embodiment of the present application. The electronic device refers to various forms of digital computers, such as laptop computers, desktop computers, workstations, personal digital assistants, servers, blade servers, mainframe computers, and other suitable computers. The electronic device may also represent various forms of mobile devices, such as personal digital assistants, cellular phones, smart phones, wearable devices, and other similar computing apparatuses. The components shown herein, their connections and relationships, and their functions are merely illustrative of and not restrictive on the implementation of the present application described and/or required herein.

As shown in FIG. 8, the electronic device includes one or more processors 801, a memory 802, and interfaces for connecting various components, including a high-speed interface and a low-speed interface. The various components are connected to each other by using different buses, and can be installed on a common motherboard or installed in other ways as required. The processor may process instructions executed in the electronic device, which includes instructions stored in or on the memory to display graphical information of the GUI on an external input/output device (such as a display device coupled to an interface). In other implementations, multiple processors and/or multiple buses may be used together with multiple memories, if necessary. Likewise, multiple electronic devices can be connected, and each device provides some necessary operations (for example, as a server array, a group of blade servers, or a multi-processor system). One processor 801 is taken as an example in FIG. 8.

The memory 802 is a non-transitory computer-readable storage medium provided by the present application. Where the memory stores instructions that can be executed by at least one processor, so that the at least one processor performs the application startup method provided in the present application. The non-transitory computer-readable storage medium of the present application stores computer instructions that are used to cause the computer to perform the application startup method provided in the present application.

As a non-transitory computer-readable storage medium, the memory 802 can be used to store non-transitory software programs, non-transitory computer executable programs and modules, for example, the application instructions/modules corresponding to the application startup method in the embodiment of the present application (e.g., the application preprocessing module 601 and the application startup module 602 shown in FIG. 6). The processor 801 executes various functional applications and data processing of the server by running non-transitory software programs, instructions, and modules stored in the memory 802, thereby implementing the application startup method in the above method embodiment.

The memory 802 may include a program storage area and a data storage area, where the program storage area may store the operating system and the application required by at least one function; and the data storage area may store data created according to the use of electronic device shown in FIG. 8. In addition, the memory 802 may include a high-speed random access memory, and may also include a non-transitory memory, such as at least one magnetic disk storage device, a flash memory device, or other non-transitory solid-state storage devices. In some embodiments, the memory 802 may optionally include memories remotely provided relative to the processor 801, and these remote memories can be connected to the electronic device shown in FIG. 8 through the network. Examples of the foregoing networks include, but are not limited to, the Internet, corporate intranets, local area networks, mobile communication networks, and combinations thereof.

The electronic device shown in FIG. 8 may further include: an input apparatus 803 and an output apparatus 804. The processor 801, the memory 802, the input device 803 and the output device 804 may be connected by a bus or in other ways, and the bus connection is taken as an example in FIG. 8.

The input apparatus 803 can receive voice, number or character information, and generate key signal inputs related to the user settings and function control of the electronic device in FIG. 8, for example, a touch screen, a keypad, a mouse, a trackpad, a touchpad, a pointing stick, one or more mouse buttons, a trackball, a joystick and other input apparatuses. The output device 804 may include a voice playback device, a display device, an auxiliary lighting apparatus (e.g., LED), a tactile feedback apparatus (e.g., a vibration motor), and the like. The display device may include, but is not limited to, a liquid crystal display (LCD), a light emitting diode (LED) display, and a plasma display. In some embodiments, the display device may be a touch screen.

According to the embodiment of the present application, where the present application also provides a computer program product, the program product includes: a computer program, the computer program is stored in a readable storage medium, at least one processor of the electronic device can read the computer program from a readable storage medium, and at least one processor executes the computer program to make the electronic device execute the solution provided by any of the foregoing embodiments.

Various implementations of the system and technology described herein can be implemented in digital electronic circuit systems, integrated circuit systems, ASIC (application specific integrated circuit), computer hardware, firmware, software, and/or combinations thereof. These various implementations may include: implemented in one or more computer programs, where the one or more computer programs may be executed and/or interpreted on a programmable system including at least one programmable processor, and the programmable processor can be a dedicated or general programmable processor, can receive data and instructions from a storage system, at least one input apparatus and at least one output apparatus, and can transmit data and instructions to the storage system, the at least one input apparatus and the at least one output apparatus.

These computer programs (also referred to as programs, software, software applications, or code) include machine instructions for programmable processors, and can be implemented by using high-level process and/or object-oriented programming language, and/or assembly/machine language. As used herein, the terms "machine-readable medium" and "computer-readable medium" refer to any computer program product, device, and/or apparatus (for example, magnetic disk, optical disk, memory, programmable logic device (PLD)) used to provide machine instructions and/or data to a programmable processor. It includes a machine-readable medium that receives machine instructions as machine-readable signals. The term "machine-readable signal" refers to any signal used to provide machine instructions and/or data to a programmable processor.

In order to provide interaction with the user, the system and the technology described here can be implemented on a computer that has: a display apparatus used to display information to users (for example, a CRT (cathode ray tube) or LCD (liquid crystal display) monitor); and a keyboard and a pointing apparatus (for example, a mouse or a trackball), through which the user can provide the input to the computer. Other types of apparatuses can also be used to provide interaction with the user; for example, the feedback provided to the user can be any form of sensory feedback (for example, visual feedback, auditory feedback, or tactile feedback); and any form (including sound input, voice input or tactile input) can be used to receive input from the user.

The system and technology described here can be implemented in a computing system that includes a back-end component (for example, as a data server), or a computing system that includes a middleware component (for example, an application server), or a computing system that includes a front-end component (for example, a user computer with a graphical user interface or a web browser, and the user can interact with the implementation of the system and technology described here through the graphical user interface or the web browser), or a computing system that includes any combination of such back-end component, middleware component, or front-end component. The components of the system can be connected to each other through any form or medium of digital data communication (for example, a communication network). Examples of communication networks include: local area network (LAN), wide area network (WAN), and the Internet.

The computer system can include a client and a server that are generally far away from each other and usually interact with each other through a communication network. The relationship between the client and the server is generated by computer programs running on corresponding computers and having a client-server relationship with each other.

With respect to the technical solution according to the embodiment of the present application, since if it is determined that the preprocessing conditions of at least one accessory application are met, the accessory application is pro-processed in the background by using the corresponding running container; and in response to the selection operation to the accessory application, the corresponding accessory application is started in the foreground. When preprocessing the accessory application, the corresponding running container is used in the background to preprocess the accessory application, so that preprocessing processes of different accessory applications can be physically isolated, completely, through the running container and mutual interference can be avoided, thereby protecting a running sandbox mechanism between accessory applications, realizing free installation of corresponding accessory application in the running container, and improving security during accessory application preprocessing. Moreover, since each running container is an independent single-threaded task, when an accessory application is preloaded in the corresponding running container, if the user starts another accessory application, such accessory application can also be started directly in the corresponding running container. It is not necessary to start the accessory application after the preloading of the other accessory application is completed. The speed of starting the accessory application is improved and the startup performance degradation is avoided.

It should be understood that the various forms of processes shown above can be used to reorder, add or delete steps. For example, the steps described in the present application can be performed in parallel, sequentially, or in a different order, as long as the desired result of the technical solution disclosed in the present application can be achieved, which is not limited herein.

The foregoing specific implementations do not constitute a limitation on the scope of protection of the present application. Those skilled in the art should understand that various modifications, combinations, sub-combinations, and substitutions can be made according to design requirements and other factors. Any amendments, equivalent substitutions and improvements made within the spirit and principles of the present application shall be included in the scope of protection of the present application.

## Claims

1. An application startup method, wherein the method is applied to a host application having carried thereon at least one accessory application, and the method comprises:
preprocessing (S101), if it is determined that a preprocessing condition of the at least one accessory application is met, an accessory application by using a corresponding running container in a background; and
starting (S 102) a corresponding accessory application in a foreground, in response to a selection operation to the accessory application.

2. The method according to claim 1, wherein the running container comprises a first running container and a second running container.

3. The method according to claim 2, wherein the preprocessing (S101), if it is determined that a preprocessing condition of the at least one accessory application is met, an accessory application by using a corresponding running container in a background comprises:
determining (S203), if it is determined that both a first accessory application and a second accessory application are comprised in a resource result page in a display area, that preloading conditions of the first accessory application and the second accessory application are met, wherein the first accessory application is located in front of the second accessory application on the resource result page; and
preloading (S204) the first accessory application by using the first running container in the background, and preloading the second accessory application by using the second running container.

4. The method according to claim 2, wherein the preprocessing (S101), if it is determined that a preprocessing condition of the at least one accessory application is met, an accessory application by using a corresponding running container in a background comprises:
determining (S303), if it is determined that the first accessory application is comprised in the resource result page in the display area, that the preloading condition of the first accessory application is met;
preloading (S304) the first accessory application by using the first running container in the background;
determining (S305), if it is determined that the updated resource result page comprises the second accessory application, that the preloading condition of the second accessory application is met, in response to an update operation to the resource result page in the display area; and
preloading (S306) the second accessory application by using the second running container in the background.

5. The method according to claim 3 or 4, wherein an preloaded accessory application comprises a corresponding target function that is used to indicate to, when it is determined that the corresponding accessory application meet a download condition of service data, pre-download the service data of the corresponding accessory application in the corresponding running container, and render and generate a startup display page of the corresponding accessory application in the corresponding running container.

6. The method according to any one of claims 1 to 4, wherein after the starting (S102) a corresponding accessory application in a foreground, in response to a selection operation to the accessory application, the method further comprises:
destroying (S206) the running container corresponding to a non-started accessory application so as to destroy the non-started accessory application.

7. The method according to claim 6, further comprising:
monitoring, if a closing operation of a started accessory application is monitored, whether there is an update operation to the resource result page in the display area; and
creating, if the update operation to the resource result page is monitored in the display area, another running container.

8. The method according to claim 7, wherein if a closing operation of a started accessory application is monitored, the method further comprises:
destroying the running container corresponding to the accessory application performing the closing operation.

9. The method according to claim 2, wherein before the preprocessing, if it is determined that a preprocessing condition of the at least one accessory application is met, an accessory application by using a corresponding running container in a background, the method further comprises:
monitoring whether a condition for creating the running container is met; and
creating, if it is determined that the condition for creating the running container is met, the first running container and the second running container in the background.

10. The method according to claim 9, wherein the monitoring whether a condition for creating the running container is met comprises:
monitoring whether the host application is started;
determining, if it is determined that the host application is started, that the condition for creating the running container is met; and
determining, if it is determined that the host application is not started, that the condition for creating the running container is not met.

11. An electronic device, comprising:
at least one processor; and
a memory communicatively connected with the at least one processor; wherein,
the memory stores instructions executable by the at least one processor, and the instructions are executed by the at least one processor to enable the at least one processor to perform the method according to any one of claims 1 to 10.

12. A non-transitory computer-readable storage medium storing computer instructions, wherein the computer instructions are used to cause the computer to perform the method according to any one of claims 1 to 10.

13. A computer program product, comprising a computer program, when executed by a processor, implements the method according to any one of claims 1 to 10.
